# EUROPEAN PATENT APPLICATION

(11) **EP 3 831 514 A1**
(43) Date of publication of application: **09.06.2021**
(21) Application number: 19212833.8
(22) Date of filing: 02.12.2019
(51) Int. Cl.: B22F 3/105, B29C 64/153, B29C 64/205, B29C 64/386, B29C 64/393, B33Y 10/00, B33Y 30/00, B33Y 50/00, B33Y 50/02, B22F 3/00, B33Y 40/00

(54) **A LEVELING ASSEMBLY FOR AN ADDITIVE MANUFACTURING APPARATUS, AN ADDITIVE MANUFACTURING APPARATUS, AND A METHOD THEREFOR**

(71) Applicant: Sandvik Machining Solutions AB, 811 81 Sandviken (SE)
(72) Inventor: BOSTRÖM, Magnus, 811 35 Sandviken (SE); VIKLUND, Per, 821 98 Rengsjö (SE)
(74) Representative: Sandvik

(57) **Abstract**

The present invention relates to a leveling assembly (100) for an additive manufacturing apparatus, wherein the leveling assembly comprises: a leveling device (101,201) for leveling a powder bed (103) of a build chamber (104) of the additive manufacturing apparatus; a frame (105) operatively connected to said leveling device and configured to traverse the powder bed with the leveling device, wherein the frame comprises: a drive (106) configured to move the frame (105) and the leveling device (101) over the powder bed (103); and wherein the frame is characterized by comprising: a force sensor (107) configured to sense a force acting on the leveling device, said force depending on the force with which the leveling device acts on the powder bed.

## Description

### TECHNICAL FIELD

The subject matter disclosed herein relates to additive manufacturing, and more particularly, to a leveling assembly for an additive manufacturing apparatus, wherein the leveling assembly comprises a leveling device for leveling a powder bed of a build chamber of the additive manufacturing apparatus; a frame operatively connected to said leveling device and configured to traverse the powder bed with the leveling device, wherein the frame comprises: a drive configured to move the frame and the leveling device over the powder bed, and a method therefor.

### BACKGROUND

Additive manufacturing, also known as 3D printing, generally involves printing and articulate one layer at a time using specialized systems. In particular, a layer of material may be deposited on the working surface of a build chamber and bonded with another layer of the same or a different material. Additive manufacturing may be used to manufacture articles from computer-aided design models using techniques such as, but not limited to, powder bed fusion (PBF), direct metal laser sintering (DMLS) or binder jet 3D printing. These additive manufacturing techniques melt, sinter, or physically bind powder particles to form layers of material to generate the desired article. Additive manufacturing may facilitate manufacturing of complex articles and enable flexibility for customization of articles compared to techniques such as casting. Additionally, additive manufacturing can reduce the overall manufacturing cost associated with generating these complex articles compared to casting techniques generally used within the art. In some additive manufacturing techniques such as binder jetting the printing process involves a step of leveling the supplied powder in the build chamber. This leveling is often performed with a roller that is moved over the working surface with the roller rotating in an opposite direction, forming a powder bed in the build chamber.

Other methods for leveling the supplied powder in the build chamber involves traversing the powder bed with a doctor blade, rake or scraper, which are all equivalent terms for a recoater in this disclosure.

The forming of the powder bed is crucial for the printing process and the quality of the printed green body.

The traverse speed of the leveling device is often limited by the powder bed. For example if the traverse speed of the leveling device is to high the powder bed may be subjected to stick slip, which means that the powder bed exhibits cracks in the powder, which in turn is detrimental for the printed green-body. Another problem with too high traverse speed is that the green body may be deformed by the leveling device.

The adjustment of the traverse speed of the roller, i.e speed over the build chamber as well as the rotational speed of the roller is important. These adjustments often involve a large amount of experimentation and optimization in order to achieve good quality of the printed green bodies in combination with shorter build time.

Another problem that can occur is that powder adheres to the roller during the leveling of the powder bed, which would ruin the print process and needs to be detected as soon as possible.

An object of the present invention is to provide an improved leveling assembly for an additive manufacturing apparatus, such as for example a binder jet printer, that at least partly obviates the above described problems.

### SUMMARY OF THE INVENTION

According to the present invention, said object is achieved by means of a leveling assembly according to claim 1.

The object of the invention is achieved by means of a leveling assembly for an additive manufacturing apparatus as defined hereinabove and in the preamble of claim 1, whose frame is characterized by comprising: a force sensor configured to sense a force acting on the leveling device said force depending on the force with which the leveling device acts on the powder bed.

According to an embodiment, the leveling assembly for an additive manufacturing apparatus comprises a first balance assembly suspended in the frame and comprising: a lever with a pivot axis said lever being operatively connected to the leveling device in a first end and to a counterweight in a second end wherein the counterweight is dimensioned to balance the lever. Said pivot axis is operatively connected to the frame wherein the lever is pivotable about the pivot axis; the force sensor connected in a first end to the frame and to the lever in a second end such that the force acting on the lever is detected. This way a force sensor with a smaller detection range and higher resolution may be used, even if the mass of the leveling device is significant.

According to an embodiment, the leveling assembly for an additive manufacturing apparatus comprises: a second balance assembly comprising: a further lever with a pivot axis, said further lever comprises the first balance assembly in a first end and a further counterweight in a second end wherein the further counterweight is dimensioned to balance the lever, wherein the first end of the force sensor is operatively connected to the further lever. Said pivot axis of the first balance assembly is operatively connected to the further lever; a further force sensor with a first end operatively connected to the further lever and a second end operatively connected to the frame wherein the further force sensor is configured to sense a force acting on the further lever which force depends on with which force the leveling device acts on the powder bed; wherein the pivot axis of the further lever is operatively connected to the frame such that the balance assembly is suspended in the frame.

According to an embodiment, the leveling device comprises a roller and a motor for rotation of the roller.

According to an embodiment, the leveling device further comprises a torque sensor configured to determine a torque of the roller. This way the torque caused by the interaction between the roller and the powder bed may be measured.

According to an embodiment, the torque sensor is configured to determine the torque based on a measurement of an electrical signal from the motor of the leveling device. This way easy integration in an existing roller drive is achieved.

According to an embodiment, the torque sensor is configured to determine the torque based on a measurement of the electrical power driving the motor of the leveling device, for example by monitoring the duty cycle of the pulse-width modulation of said motor.

According to an embodiment, the leveling assembly comprises a control unit wherein the control unit is connected to the force sensor and in that the control unit is configured to control a movement of the frame and the leveling device based on the input from the force sensor and/or wherein the control unit is connected to the torque sensor and the control unit is configured to control the movement of the frame and the leveling device based on the input from the torque sensor. This way closed-loop control may be used for leveling.

According to an embodiment, the leveling device comprises a recoater.

According to an embodiment, the leveling assembly for an additive manufacturing apparatus comprises a control unit connected to the force sensor and the control unit is configured to control a movement of the frame and the leveling device based on the input from the force sensor.

According to one embodiment, a maximum force vector acting on the leveling device can be set so that an alarm can be raised, or the printing process can be stopped or paused, if this force is exceeded.

The object of the invention is also achieved by means of an additive manufacturing apparatus characterized in that it comprises a leveling assembly according to the present invention. This way better monitoring and/or control of the leveling process is achieved.

According to an embodiment, the additive manufacturing apparatus is a binder jet printer. The present invention is especially useful in a binder jet printer due to the use of a binder that may adhere to the leveling device used in the printer.

The object of the invention is achieved by means of a method of controlling an additive manufacturing apparatus comprising a leveling assembly which leveling assembly comprises: a leveling device for leveling a powder bed of a build chamber of the additive manufacturing apparatus; a frame comprising a drive for moving the leveling device over the powder bed; wherein the method is characterized by the step of: a) determining a force vector acting on the leveling device said force depending on the force with which the leveling device acts on the powder bed, and if the leveling device comprises a roller, determining the torque of the roller.

According to an embodiment, the method comprises a further step of: b) controlling the traverse speed of the leveling device based upon the step a) of determining a force vector acting on the leveling device, and if the leveling device comprises a roller, controlling the rotational speed of the roller.

According to an embodiment, the method comprises the further steps of: c) determining if the force acting on the leveling device is outside a predetermined range which predetermined range is indicative of a leveled powder bed; d) raise an alert signal upon determining that the force is outside the predetermined range. This way a better monitoring is achieved and thereby better quality in the printing process. Instead of raising an alert signal, the printing process can also be stopped or paused.

### LIST OF DRAWINGS

The invention will in the following be more closely described by means of embodiment examples, with reference to appended drawings. In the drawings:
Fig. 1 is a schematic perspective view of a leveling device according to an embodiment of the present invention,
Fig. 2 is a schematic perspective view of a leveling device according to an embodiment of the present invention,
Fig. 3 is a schematic perspective view of a leveling device according to an embodiment of the present invention, as well as a cross-sectional view of the leveling device along line A-A',
Fig. 4 is a cross-sectional view illustrating an embodiment of the present invention,
Fig. 5 is a flowchart illustrating a method according to the present invention, and
Fig. 6 is a schematic block diagram of a machine with a non-transitory computer readable memory according to an embodiment of the invention.

### DETAILED DESCRIPTION OF EMBODIMENTS

The present inventors have realized that the forces involved in the forming of the powder bed, i.e. leveling the powder in the powder bed, by means of a leveling device, such as for example a roller, or a recoater, may provide important information about the forming or formed layer. This information may be acquired by means of monitoring the forces acting on the leveling device. This information may be useful during optimization of the print process, or during monitoring of the print process for quality control. This information may be acquired by means of providing a force sensor to the leveling device. When a roller is used as a leveling device, monitoring the torque acting on the roller by means of a torque sensor may provide valuable information about the rolled layer.

A common error in binder jet printing is that cracks forms in the powder bed (stick slip) due to too high travese speed of the leveling device over the powder bed. This can also cause the green body to be deformed by the leveling device. These errors may also be detected and/or avoided by means of the present invention.

Another error in binder jet printing is that the binder sticks to the leveling device and powder adheres thereto during leveling. This causes the leveling of the powder bed to become uneven. This error is usually detected by means of visual monitoring during leveling, but the inventive leveling assembly makes it possible to detect the problem by a measurement of the forces acting on the leveling assembly.

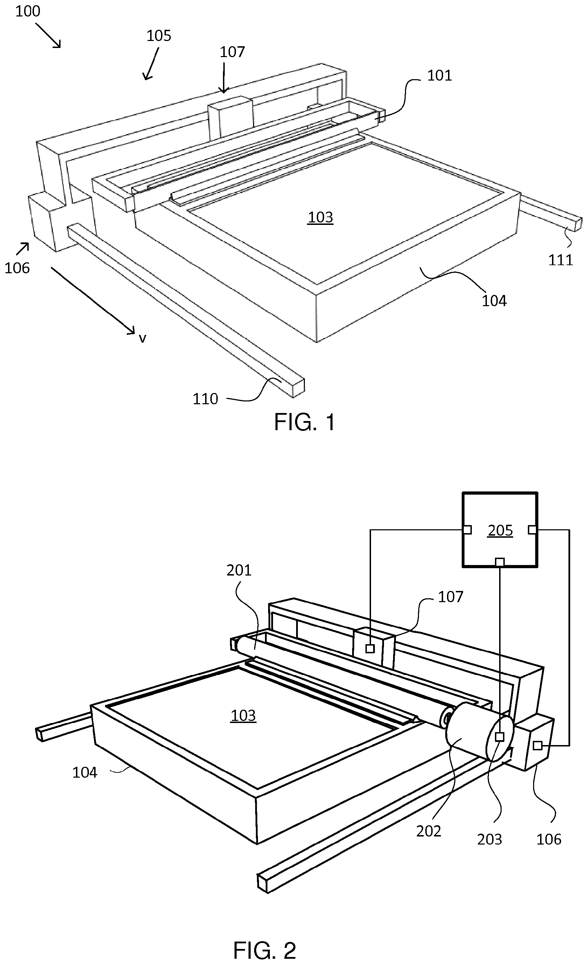

In Fig. 1 a leveling assembly, generally designated 100, is illustrated. The leveling assembly may for example be part of an additive manufacturing apparatus. But the leveling assembly may also be part of a powder development apparatus for optimization of the forming of the powder bed and the associated printing process.

Fig.1 illustrates the leveling assembly 100 for an additive manufacturing apparatus. The leveling assembly comprises a leveling device 101,201 for leveling a powder bed 103 of a build chamber 104 of the additive manufacturing apparatus. In the embodiment according to Fig. 1 the leveling device is a recoater 101. The leveling assembly further comprises a frame 105 operatively connected to said leveling device and configured to traverse the powder bed with the recoater, wherein the frame comprises a drive 106 configured to move the frame 105 and the leveling device 101 over the powder bed 103. A common drive mechanism used in the art is a cogbelt attached to the frame and driven by a servo or a stepper motor such that the frame slides along two linear guide rails 110, 111.

The frame comprises a force sensor 107 configured to sense a force acting on the recoater, said force depending on the force with which the recoater acts on the powder bed. The force sensor may be three-dimensional force sensor, which sense forces along all axes. But the force sensor may also be of a one- or two-dimensional type, in which for example the force along the main direction of movement v is one dimension, and a dimension perpendicular to the powder bed is another dimension.

Fig. 2 shows a leveling assembly which differs from the leveling assembly disclosed with reference made to Fig. 1 in that the leveling device comprises a roller 201. The roller 201 is driven by a motor 202. The leveling device further comprises a torque sensor 203 configured to determine a torque of the roller 201.

In one embodiment, the torque sensor 203 is configured to determine the torque based on a measurement of an electrical signal from the motor 202 of the leveling device, this electrical signal may for example be the current supplied to the motor. The electrical signal may in an alternative embodiment come from a torsion sensor, such as a torsion rod with associated electronics, such as strain gauges.

According to an embodiment, the torque sensor is configured to determine the torque based on a measurement of the electrical power driving the motor of the leveling device, for example by monitoring the duty cycle of the pulse-width modulation of said motor.

The leveling assembly further comprises a control unit. The control unit 205 is connected to the force sensor 107, and the control unit is configured to control a movement of the frame and the leveling device, based on the input from the force sensor 107.

If the leveling device is a roller with a motor and a torque sensor, the control unit 205 is connected to the torque sensor 203, and to the force sensor 107. The control unit is additionally configured to control the movement of the frame and the leveling device, based on the input from the torque sensor.

The sensed forces obtained with the force sensor may be very small and it may be very useful to use a balancing mechanism in order to use force senors with much smaller force detection ranges, which usually provides better resolution and precision.

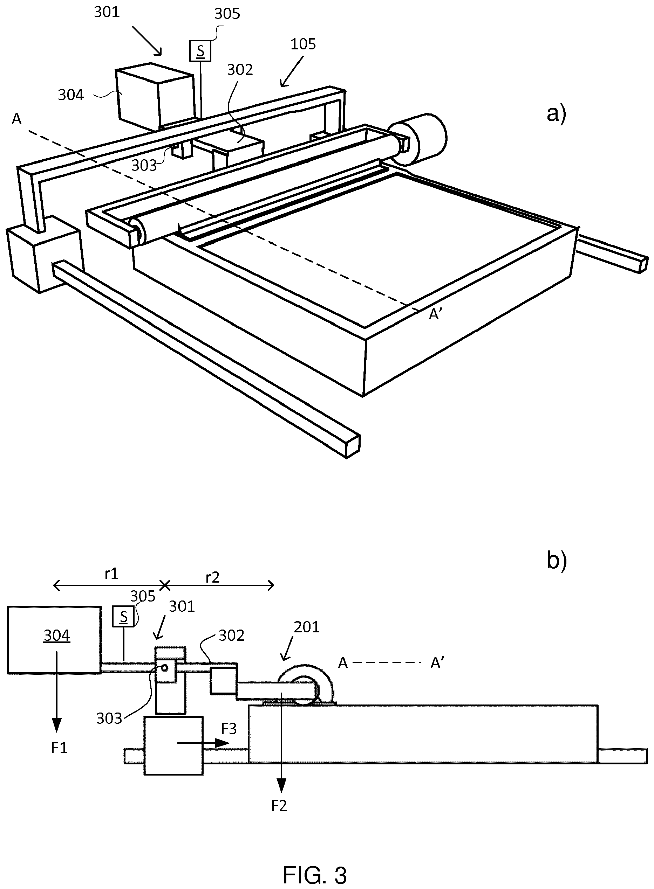

Fig. 3 discloses a leveling assembly with a first balance assembly 301 suspended in the frame 105 and comprising a lever 302 with a pivot axis 303. The lever being operatively connected to the leveling device 101,201 in a first end, and to a counterweight 304 in a second end. The counterweight is dimensioned to balance the lever. This means that a force F1 from the counterweight 304 multiplied with a distance r1 from the pivot axis 303 to the center of mass of the counterweight 304, should be equal to the force F2 due to the leveling device, which in this example is the roller 201, multiplied with a distance r2 from the pivot axis 303 to the center of mass of the leveling device. A force F3 along the direction of movement of the frame may be detected with a separate force sensor or may be detected by means of the current to the drive 106. This first balance assembly provides an efficient solution with good accuracy. The pivot axis 303 is operatively connected to the frame 105, wherein the lever 302 is pivotable about the pivot axis 303. The force sensor 305 is connected in a first end to the frame and to the lever in a second end, such that the force acting on the lever is detected. The first balance assembly may also include an arresting mechanism which mechanically locks the lever to the frame such that leveling device may be replaced or serviced without affecting the force sensor connected to the lever.

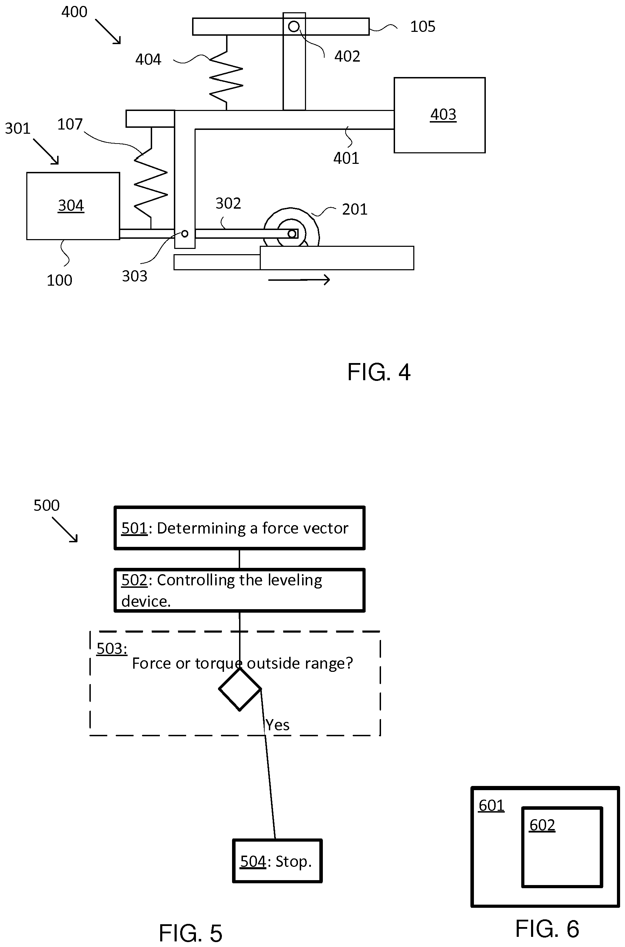

Now with reference made to Fig. 4 another embodiment of a leveling assembly will be disclosed. This embodiment differs from the embodiment disclosed with reference made to Fig. 3 in that it comprises a second balance assembly 400, comprising a further lever 401 with a pivot axis. The further lever comprises the first balance assembly in a first end, and a further counterweight 403 in a second end, wherein the further counterweight is dimensioned to balance the lever, wherein the first end of the force sensor 107 is operatively connected to the further lever 402, said pivot axis 303 of the first balance assembly is operatively connected to the further lever; a further force sensor 404 with a first end operatively connected to the further lever 401, and a second end operatively connected to the frame, wherein the further force sensor is configured to sense a force acting on the further lever 401, which force depends on with which force the leveling device acts on the powder bed. The pivot axis 402 of the further lever 401 is operatively connected to the frame such that the balance assembly is suspended in the frame. By this arrangement it is possible to detect forces both perpendicular to the powder bed and along the guide rails i.e paralell with the powder bed. This embodiment may also be provided an arresting mechanism for locking the further lever 401.

Fig. 5 shows a flowchart which illustrates a method of controlling an additive manufacturing apparatus, generally designated 500, comprising a leveling assembly.

The leveling assembly comprises a leveling device 101 for leveling a powder bed 103 of a build chamber 104 of the additive manufacturing apparatus, and a frame 105, comprising a drive 106 for moving the leveling device over the powder bed.

The method comprises the step of:
a) Determining 501 a force and/or momentum vector acting on the leveling device 101, said force depending on the force with which the leveling device acts on the powder bed.
b) Controlling 502 the traverse speed of the leveling device based upon the step a) of determining 502 a force and/or momentum vector acting on the leveling device.
c) Determining 503 if the force and/or momentum acting on the leveling device is outside a predetermined range, which predetermined range is indicative of a leveled powder bed.
d) Stop 504, upon determining that the force or torque is outside the predetermined range.

The predetermined range may be indicative of an adjustable deviation range. Thus if the force or torque is outside the predetermined range it may be possible to correct the error.

In one embodiment the step c) further comprises a step of returning to the step b), upon determining that the force or torque is within the predetermined range. This way a control loop is achieved.

Fig. 6 shows a non-transitory computer readable media 602 having information embodied therein, the information including instructions for a machine 601 to execute the method described above with reference made to Fig. 5.

The present invention will now be described when in use by means of a scenario.

In this scenario, a binder jet printer is equipped with a leveling device comprising a roller according to the present invention. The binder jet printer is in the process of printing a green-body of a powder in the powder bed. In this scenario, the traverse speed of the leveling device is too high, which causes stick slip in the powder bed. This is detected by the control unit and the speed of the traverse movement of the leveling device is decreased. This decrease of speed may be performed in a closed control loop of the control unit.

The present invention will now be further described when in use by means of a further scenario. In this further scenario, the controller is set to detect a maximum force and/or momentum vector, above which the powder bed is known to suffer from stick slip or other adverse effects, and control the transverse speed of the leveling device to and/or rotational speed of the roller so that this force is never exceeded.

The present invention will now be further described when in use by means of a further scenario. In this further scenario, a binder jet printer is equipped with a leveling device comprising a roller according to the present invention. The binder jet printer is in the process of printing a green-body of a powder in the powder bed. During the printing the step of evaporation of the binder is to short and the binder is still sticky after the evaporation step. During the leveling by means of the roller binder adheres to the roller and causes the surface of the roller to be uneven. This may in turn cause metallic powder to stick to the roller and the leveling of the powder bed becomes uneven. This will be detected by means of the torque sensor during rolling since the adhered binder on the roller will protrude into the powder bed during rolling and this causes a different torque compared to the normal torque encountered during rolling.

In known binder jet printers these errors are detected by means of visual inspection during printing, and often detected to late which results in a damaged green-body which may be discarded due this error.However, if these errors are detected directly after they occur corrective actions may be performed, and the green-body may be saved.

Thus, the present invention is an important component in a fully automatic equipment for additive manufacturing that utilizes a powder bed.

### ALTERNATIONS AND MODIFICATIONS

The leveling device according to embodiments disclosed herein may be arranged in a test unit for evaluating properties of the powder bed in the build chamber. This may be very useful for both additive manufacturing machine builders as well as powder producers.

Other combinations of scrapes and rolls are also possible such that a leveling device comprises a combination of a recoater and a roller.

## Claims

1. A leveling assembly (100) for an additive manufacturing apparatus, wherein the leveling assembly comprises:
a leveling device (101,201) for leveling a powder bed (103) of a build chamber (104) of the additive manufacturing apparatus;
a frame (105) operatively connected to said leveling device and configured to traverse the powder bed with the leveling device, wherein the frame comprises:
a drive (106) configured to move the frame (105) and the leveling device (101) over the powder bed (103); and
wherein the frame is **characterized by** comprising:
a force sensor (107) configured to sense a force acting on the leveling device, said force depending on the force with which the leveling device acts on the powder bed.

2. A leveling assembly for an additive manufacturing apparatus according to claim 1, **characterized by** comprising:
a first balance assembly (301) suspended in the frame (105) and comprising:
a lever (302) with a pivot axis (303), said lever being operatively connected to the leveling device (101,201) in a first end, and to a counterweight (304) in a second end, wherein the counterweight is dimensioned to balance the lever (302), said pivot axis is operatively connected to the frame, wherein the lever is pivotable about the pivot axis;
the force sensor (107) connected in a first end to the frame and to the lever in a second end, such that the force acting on the lever is detected.

3. A leveling assembly for an additive manufacturing apparatus according to claim 2, **characterized by** comprising:
a second balance assembly (400), comprising:
a further lever (401) with a pivot axis (402), said further lever comprises the first balance assembly in a first end, and a further counterweight (403) in a second end, wherein the further counterweight is dimensioned to balance the lever, wherein the first end of the force sensor (107) is operatively connected to the further lever (402), said pivot axis (303) of the first balance assembly is operatively connected to the further lever;
a further force sensor (404) with a first end operatively connected to the further lever (401), and a second end operatively connected to the frame, wherein the further force sensor is configured to sense a force acting on the further lever (401), which force depends on with which force the leveling device acts on the powder bed;
wherein the pivot axis (402) of the further lever (401) is operatively connected to the frame such that the balance assembly is suspended in the frame.

4. A leveling assembly for an additive manufacturing apparatus according to any one of claim 1 to 3, **characterized in that** the leveling device comprises a roller (201), and a motor (202) for rotation of the roller.

5. A leveling assembly according to claim 4, **characterized in that** the leveling device further comprises a torque sensor (203) configured to determine a torque of the roller (201).

6. A leveling assembly for an additive manufacturing apparatus according to claim 5, **characterized in that** the torque sensor (203) is configured to determine the torque based on a measurement of an electrical signal from the motor (202) of the leveling device, or an electrical signal from a torque rod operatively connected to the leveling device.

7. A leveling assembly for an additive manufacturing apparatus according to any one of claims 4 to 6, **characterized by** comprising:
a control unit (205),
wherein the control unit (205) is connected to the force sensor (107), and in that the control unit is configured to control a movement of the frame and the leveling device, based on the input from the force sensor (107), and/or
wherein the control unit (205) is connected to the torque sensor (203) and the control unit is configured to control the movement of the frame and the leveling device, based on the input from the torque sensor.

8. A leveling assembly for an additive manufacturing apparatus according to any one of claims 1 to 3, **characterized in that** the leveling device comprises a recoater (101).

9. A leveling assembly for an additive manufacturing apparatus according to claim 8, **characterized by** comprising:
a control unit (205) connected to the force sensor (107), and in that the control unit is configured to control a movement of the frame and the leveling device, based on the input from the force sensor (107).

10. An additive manufacturing apparatus, **characterized in that** it comprises a leveling assembly according to any one of the preceding claims.

11. An additive manufacturing apparatus according to claim 10, wherein the additive manufacturing apparatus is a binder jet printer.

12. A method (500) of controlling an additive manufacturing apparatus, comprising a leveling assembly (100), which leveling assembly comprises:
a leveling device (101) for leveling a powder bed (103) of a build chamber (104) of the additive manufacturing apparatus;
a frame (105), comprising a drive (106) for moving the leveling device over the powder bed;
wherein the method is **characterized by** the step of:
a) determining (501) a force vector acting on the leveling device (101), said force depending on the force with which the leveling device acts on the powder bed.

13. A method of controlling an additive manufacturing apparatus according to claim 12, **characterized by** a further step of:
b) controlling (502) the traverse speed of the leveling device based upon the step a) of determining (502) a force vector acting on the leveling device, and if the leveling device comprises a roller the rotational speed of the roller is controlled.

14. A method of controlling an additive manufacturing apparatus according to claim 13, **characterized by** the steps of:
c) determining (503) if the force acting on the leveling device is outside a predetermined range, which predetermined range is indicative of a leveled powder bed;
d) raise (404) an alert signal, upon determining that the force is outside the predetermined range.

15. A non-transitory computer readable media (602) having information embodied therein, the information including instructions for a machine (601) to execute the method according to any one of claims 12 to 14.
